# EUROPEAN PATENT APPLICATION

(11) **EP 4 553 765 A1**
(43) Date of publication of application: **14.05.2025**
(21) Application number: 23315410.3
(22) Date of filing: 07.11.2023
(51) Int. Cl.: G06T 7/55, G06T 7/30, G06T 7/579, G06T 7/70, G01C 21/00, G06T 7/33, G06T 17/00, G06T 17/05

(54) **A METHOD OF ESTIMATING A POSE OF A PANORAMIC IMAGE**

(71) Applicant: Check&Visit, 35000 Rennes (FR)
(72) Inventor: Rouch, Thomas, 35000 RENNES (FR); Ybanez Zepeda, José Alonso, 35000 RENNES (FR); Duchêe, Sylvain, 35000 RENNES (FR)
(74) Representative: Paustian & Partner Patentanwälte mbB

(57) **Abstract**

The invention relates to a method for estimating a pose of a panoramic image, comprising: obtaining a 3D representation of a scene based on a set of first perspective images of the scene using a reconstruction module; providing the panoramic image made by a panoramic camera in the scene; converting the panoramic image into a set of second perspective images of the scene, each second perspective image being associated with a virtual camera; for each second perspective image, estimate a 6D pose of the virtual camera in the 3D representation based on the second perspective image using a localization module; selecting estimated 6D poses which fulfill a predefined set of criteria; and estimating the pose of the panoramic image in the 3D representation based on the second perspective images associated with the selected 6D poses using the localization module.

## Description

### BACKGROUND

Obtaining a 3D (i.e. three dimensional) model, i.e. a digital twin of a real 3D scene, may have various technical purposes. The scene may be e.g. an indoor scene, such as a furnished apartment, or a construction site of a building. For example, it may be desirable to be able to virtually move in the 3D scene. In other words, it may be desirable to freely choose a 6D-pose of a virtual camera which can be freely positioned in the virtual scene.

Conventionally, 2D (i.e. two dimensional) image data are obtained with a perspective camera device, for example a smartphone. The 2D image data may comprise single 2D images or a (video) stream of 2D image frames. Typically, a user of the camera device may walk through the scene and simultaneously take several images or a video of different parts of the scene.

A perspective camera device, e.g. a smartphone camera, typically corresponds to a pinhole camera model. In the standard pinhole camera model, the scene is projected onto a 2D image plane positioned in front of the camera. The focal length plays a pivotal role in determining both the angle of view and magnification. A longer focal length results in a narrower angle of view and higher magnification. This image type may also be referred to as a perspective image. Beside the pinhole camera model there exist other camera models with distortion which may also describe the characteristics of a perspective camera (i.e. a general perspective model).

The pinhole camera model serves as a mathematical framework for understanding how a point in a 3D space is projected onto the image plane of an ideal pinhole camera. In this model, the camera aperture is envisioned as a point without the involvement of lenses for light focusing. However, it does not account for geometric distortions or blurring caused by lenses and finite-sized apertures. The general perspective model extends beyond the limitations of the basic pinhole camera model by incorporating factors such as lens distortion, making it a more comprehensive representation for real-world applications in computer vision and graphics.

Conversely, a spherical camera model projects the scene onto a unit sphere encompassing the camera. This sphere is then unwrapped into a 'flat rectangular image, akin to representing Earth on a 2D map. For example, a spherical camera model may correspond to a 360 camera (e.g. a Ricoh^{®} 360° camera).
360 images (i.e. a panoramic image or 360° image) taken by a 360 camera are commonly used to generate panoramic images of scenes, e.g. of a landscape or of an indoor scene. In one particular example, 360 images may be used for virtual visits to navigate inside an apartment or house.

### SUMMARY

Currently, it remains desirable to combine the above-mentioned different image types in an advantageous manner.

Accordingly, the present disclosure relates to a computer-implemented method for estimating a pose of a panoramic image (e.g. in a scene). The method comprises:
obtaining a 3D representation of a scene based on a set of first perspective images of the scene using a reconstruction module;
providing the panoramic image made by a panoramic camera in the scene;
converting the panoramic image into a set of second perspective images of the scene, each second perspective image being associated with a virtual camera;
for each second perspective image, estimate a 6D pose of the virtual camera in the 3D representation based on the second perspective image using a localization module;
selecting estimated 6D poses which fulfill a predefined set of criteria; and estimating the pose of the panoramic image in the 3D representation based on the second perspective images associated with the selected 6D poses (i.e. based on only those second perspective images whose estimated 6D poses fulfill the predefined set of criteria) using the localization module.

By providing such a method, an alignment of a 360° camera panoramic image to a 3D model of the scene is found while minimizing alignment errors. In other words, the 3D scene representation of the scene provides a coherence between a smartphone camera image (e.g. of a hotspot) and the panoramic image, wherein the panoramic image is aligned with the 3D scene representation. In other words, the method may serve for positioning a 360° image on a 3D scene.

A 6D pose or 6DoF pose may be defined by 3D position information and 3D orientation (i.e. 3D rotational) information, e.g. of a real camera device or of a virtual camera. The terms "camera" and "camera device" may be used interchangeably in the present disclosure.

By estimating the pose of the panoramic image, the pose of the panoramic camera in the scene may be estimated. Hence, the method of the present disclosure may also serve for estimating a pose of the panoramic camera.

The first and/or second perspective image may be in accordance with or may correspond to or may be made in accordance with a camera model with distortion, e.g. a pinhole camera model or a a fisheye lens model, or any other perspective model.

The panoramic image may be a cylindrical view or spherical panorama or equirectangular panorama image. The panoramic image may be in accordance with or may correspond to or may be made in accordance with a spherical camera • model.

The panoramic image may be a 360° image or any other range of its viewing angle, e.g. 90° or 180° or any other value. The panoramic image may be horizontally oriented, i.e. its varying viewing direction extending parallel to the horizon and/or a ground floor (e.g. from left to right). It is however also possible that the panoramic image, extends in another dimension, e.g. vertically (e.g. from up to down).

The panoramic image may be provided with an orientation information of a vertical axis of the panoramic camera. For example, the orientation information of the vertical axis can be provided by a gravity sensor integrated into the panoramic camera.

The pose of the panoramic camera may comprise a 3D position of the panoramic camera and optionally an orientation information of a vertical axis of the panoramic camera.

Further, estimating the pose of the panoramic camera may comprise aligning the orientation of the vertical axis of the panoramic camera with an orientation of the vertical axis of the 3D representation. For example, once the gravity is fixed the remaining degrees of freedom are: rotation around gravity and translation. Thus, outlier poses can be sorted out in case they are not aligned with the measured gravity/vertical axis.

Estimation of the pose of the panoramic image in the 3D representation may comprise inputting the entirety of second perspective images associated with the selected 6D poses into the localization module, wherein the localization module may be configured to minimize an error of the estimated pose based on said entirety of second perspective images.

Transforming the panoramic image into the set of second perspective images may cover all of a spherical space, such as cubefaces or any other kind of perspective or planar projection of the sphere onto an image plane.

The second perspective images may be cubefaces of a virtual cube representing the converted panoramic image. For example, in the case of cubefaces, distortion in the panoramic image is removed.

Images can overlap in a 360° space, and can be imagined as a real (i.e. physical) camera that takes several pictures all around but keeping the camera at an unique position. Virtual images have desirably same pixel size and same field of view (angle) as for example the smartphone camera images.

Accordingly, the extracted second perspective images may have a predefined pixel size and/or field of view, and may be corresponding to a pixel size and/or a field of view of the first perspective images

The second perspective images may be individually localized, and outliers may be removed by comparing the estimated poses of the second perspective images and the vertical axis.

In this context, the vertical axis may be aligned with gravity. This option of alignment with gravity is in particular advantageous, in case the panoramic camera device provides the gravity information. Otherwise, or in case no alignment with gravity is foreseen in this context, the resulting 6D position may be the same for all images (we have the relative orientation).

Moreover, each extracted second perspective image is a valid image, but it might fail during the localization process, because they may lack features or have redundant or no (or only few) visual patterns, e.g. a white wall. The main advantage is in a global optimization across the second perspective images, as it can be iteratively checked which of the extracted images is an outlier with respect to the others, because all the extracted second perspective images share the same position and only the rotation is different. In this regard, the rotation may be a relative rotation that corresponds to the virtual camera used to create the corresponding second perspective image.

The method may be at least partially performed using an artificial intelligence (AI) model. In particular, the reconstruction module may use or comprise a Structure from Motion (SfM) algorithm. The localization module might not be performing SfM, but it may be built on top of it and may use the same data format. The reconstruction module may use SfM both for the 3D reconstruction process (i.e. for deducing 6D poses of all input perspective images), and for the data format returned by this process (i.e. images and camera poses).

The at least one of the reconstruction module and the localization module may be or may comprise a deep learning model. For example, the localization module may be configured to extract features on an image and tries to match the image, based on those features, to pictures of a 3D model.

The localization module may be built on top of the reconstruction module.

The localization module may be configured to use the reconstruction module for extracting features from an associated second perspective image, and optionally for mapping the features to the 3D representation.

The localization module may estimate a 6D pose of a camera based on the output of the reconstruction module, the camera being optionally a real camera or a virtual camera.

The localization module may formulate an optimization problem to localize the set of inliers (after removing the outliers as described below) of virtual cameras used to create the set of extracted images of the inlier generated images. Using several images may make the final position estimation more robust as it can be easily detected when images that do not carry enough information (i.e. features) can generate outliers that otherwise would introduce errors in the optimization problem. The set of virtual cameras may have fixed relative poses in a reference system, such as the SfM reference system. For example, SfM may be used on a 2D dataset (e.g. 2D images) to obtain a first representation of a 3D space. Then it may be advantageous to align a 360 image with respect to the SfM reference system.

The method may accordingly include the predefined set of criteria comprising at least one of: a 3D position of the virtual camera being within a predefined 3D cluster or 3D area with respect to 3D positions of the other virtual cameras, a 3D orientation of the virtual camera may be in a predefined angular range with respect to the 3D orientations of the other virtual cameras, the virtual camera and/or its associated second perspective image may be aligned with a vertical axis, and may optionally use a predefined tolerance range.

For example, in the case the extracted second perspective images are mapped as cubefaces, these cubeface images are compared in the following manner: 1) are the positions of virtual cameras within a cluster / threshold 3D area in the 3D space (in case of ambiguous deep features, camera may be predicted to be far away); 2) are the orientations of the virtual cameras in a 90° relationship (with some tolerance); 3) is each virtual camera / cubeface image aligned with the vertical axis? As a result, any cubeface image not fulfilling conditions 1) to 3) are disregarded and considered outliers, and the rest are inliers.

In the case cubefaces are used, any cubeface should also be orthogonal to other cubefaces or parallel to only one other cubeface. For any other kind of perspective or planar projection, the relative position of each virtual camera c may be taken into account as these relative positions have been generated and are thus known.

The reconstruction module may also be referred to as a feature detection, extraction or matching module.

The reconstruction module may use or comprise a machine-learning model or algorithm, e.g. a neural network. However, the mentioned feature extraction may also be achieved by the reconstruction module using another algorithm than a neural network.

The reconstruction module may comprise a deep feature alignment algorithm (e.g. a Pixel-Perfect Structure-from-Motion (PP-SfM) algorithm), which generates a sparse point cloud with feature points. The feature points may in particular represent at least one of: points related to a geometry variation, e.g. intersections between planes (e.g. walls, ceiling, floor), points related to objects boundaries, and/or points with a texture change, pattern, high contrast, etc. The resulting sparse point cloud may be considered as merely an intermediate result. However, the deep feature alignment algorithm may allow (by means of the sparse point cloud) to achieve an alignment of the positions of the features as global problem.

Thus, the output of the PP-SfM is provided to a modular toolbox for state-of-the-art 6D visual localization, such as the Hierarchical Localization (hloc), which leverages image retrieval, feature matching and SfM. Hloc is advantageous since it is fast, accurate, and scalable.

Accordingly, a relative position of a 360 camera (position and orientation in case the camera provides a gravity axis) in relation to the cameras of the 2D images (6D pose) may be accurately estimated.

In summary, as already (at least partially) outlined above, the pipeline process may perform at least the following:
1) Run the Reconstruction module as initializer to get the 3D representation of the scene from the first perspective images taken by a camera device such as a smartphone;
2) Run the Localization module individually on each second perspective image extracted from a panoramic image taken by a 360 camera, to get 6D pose estimates, by inputting every second perspective image (e.g. in the form of a cubeface image or any other kind of perspective or planar projection of the sphere onto an image plane) into the SfM-based model, extract deep features, predict 6D pose of virtual camera based on deep features;
3) Compare the 6D pose estimates, and remove outliers;
4) Run the Localization module on all the inlier perspective images together
(their relative poses are fixed during the process) to estimate the final pose of the panoramic image;

Thus, the output of the pipeline process described above may be in form of a 6D pose of a panoramic image/ virtual camera with respect to a 3D representation of a scene.

The present disclosure may also refer to a method of enhancing a 3D representation of a scene, comprising: performing a method according to any one of the preceding methods, and integrating the panoramic image into the 3D representation at the estimated pose of the panoramic camera. Said integration is advantageous for filling blind spots in a 2D image set with image information of a 360° camera image.

Accordingly, the method may further comprise selecting an area in the 3D representation having a predefined characteristic; estimating a 6D pose of the selected area; based on the 6D pose of the selected area, selecting a second perspective image which covers the area of the selected area; and updating the 3D representation based on the selected second perspective image using the reconstruction module. This way a blind spot can be filled with information of a 360° camera image by identifying the blind spot (e.g. a surface which is a region of the ceiling or of one side of a sofa), determining the 6D pose of the blind spot, and using, for example, one of the cubeface images to generate a further custom-oriented image which covers the area of the blind spot. Finally, this "polished" image is provided to the SfM model to update the 3D space.

The present disclosure may further refer to a computer program comprising instructions which, when the program is executed by a computer, cause the computer to carry out a method according to any one of the preceding methods or processes.

The present disclosure may further refer to a system, comprising:
at least one processor, and
at least one memory storing computer-executable instructions, which when executed by the processor, cause the processor to perform a method according to any one of the preceding methods.

For example, the memory may store a 3D representation of a scene, and at least one panoramic image integrated into the 3D representation at an estimated pose of the panoramic camera, wherein the pose is estimated using a method according to any one of the preceding methods.

The processor (or processing unit) may be a component of electronic devices that may be responsible for carrying out computational tasks. There may be different types of processing units, each designed for specific purposes. A processing unit may be or may comprise a Central Processing Unit (CPU), Graphics Processing Unit (GPU), Digital Signal Processor (DSP), Field-Programmable Gate Array (FPGA), and/or Application-Specific Integrated Circuit (ASIC). The CPU may be the primary processing unit in a computer that may be responsible for executing most of the instructions and calculations required by the computer. GPUs may be specialized processing units that may be designed to handle the complex calculations required for rendering graphics and video. DSPs may be specialized processing units that may handle signal processing tasks, while FPGAs may be reconfigurable processing units that may be programmed to perform various computational tasks. ASICs may be customized processing units designed to perform a specific set of tasks, optionally making them highly efficient and effective for their intended purpose. These processing units may be found in a wide range of electronic devices, such as medical electronic devices. Medical electronic devices may include computers, smartphones, and other digital devices, optionally enabling these devices to perform various computational tasks efficiently and accurately. The method according to the present disclosure may also run on a virtual server.

The system may also comprise or be connectable with a camera device, e.g. a smartphone, and/or a 360° camera as described above.

The present disclosure may also relate to a computer program comprising instructions which, when the program is executed by a computer, cause the computer to carry out the method according to any examples of the present disclosure.

In case the method operations may comprise any aspects (for example physical) which go beyond a mere data processing (for example an ultrasound signal processing), the computer program may further comprise computer-readable instructions which when executed by a data processing system cause any external elements of a system to carry out these operations.

The present disclosure may also relate to a computer-readable medium comprising instructions which, when executed by a computer, cause the computer to carry out the method according to any examples of the present disclosure.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate, the principles thereof.

### BRIEF DESCRIPTION OF THE DRAWINGS

Fig. 1 shows a schematic drawing of a system 100 according to examples of the present disclosure.
Fig. 2 schematically shows a method 200 for estimating a pose of a panoramic image according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

360 images (i.e. a panoramic image or 360° image) are commonly used to generate panoramic images of scenes, e.g. of a landscape or of an indoor scene. In one particular example, 360 images may be used for virtual visits to navigate inside an apartment or house.

It may be desirable to automatically align a 360 image with a 3D representation of a scene including for example defects or damages that occurred after a rental period and that were retrieved after an inspection using a smartphone camera. This allows a user to navigate on the 360 virtual visit and see hotspots corresponding to the defects. When the virtually visits the scene and clicks on one of the hotspots, he or she may obtain an image of a 2D dataset taken with the smartphone that corresponds to the defect at this place.

However, in conventional technologies it is difficult to derive a 6D pose (also called a 6 Degrees-of-Freedom (DoF) pose) of the 360 images in the 3D representation. Accordingly, estimating a pose of a panoramic image within a 3D representation of a scene is not a trivial task.

While tools are publicly available for localizing a standard 2D image or camera view within a Structure from Motion (SfM) model, no solution exists for handling and integrating 360 images.

Conventional relocalization algorithms are only available for standard cameras operating under the pinhole model or any other model using distortion (i.e. a general perspective model), as described above. For 360 cameras, the predominant focus lies in Room Layout Estimation, which entails estimating rudimentary 3D models from each 360 camera view and aligning these models. This process involves matching 3D models as opposed to the conventional 2D colored features, thus reducing uncertainty arising from the aperture problem arising for cameras operating under the perspective model.

Thus, there is a need to locate and align a 360 panoramic image inside an SfM model.

In view of the above, the present disclosure relates to methods and systems for estimating a pose of a panoramic image in a 3D representation of a scene. In particular, the present disclosure relates to machine learning technologies for estimating the pose of the panoramic image in the 3D representation based on second perspective images associated with selected 6D poses using a reconstruction module and a localization module.

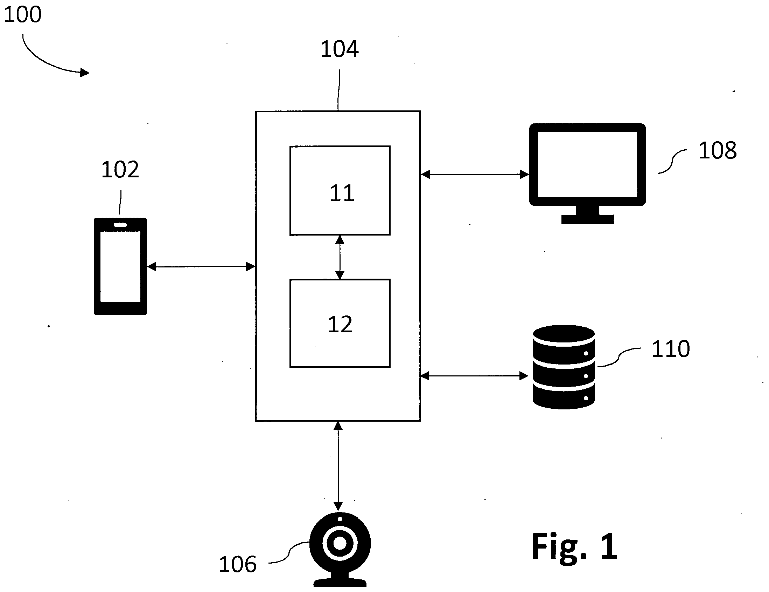

Fig. 1 shows a schematic drawing of a system 100 according to examples of the present disclosure. The system 100 may be configured to perform a method according to the present disclosure. For example, the system 100 may be configured for estimating a pose of a panoramic image in a 3D representation of a scene.

The system 100 may comprise:
- at least one processor 11,
- at least one memory 12 storing computer-executable instructions, the computer-executable instructions when executed by the processor cause the computing device to perform a method according to the present disclosure.

The system 100 may further comprise or be configured to be connectable to:
- a camera device 102, for example a smartphone, table or other type of device comprising a digital camera,
- a panoramic (i.e. 360°) camera 106, for example a Ricoh^{®} 360° camera, optionally including one gravity sensor (not shown),
- a display device 108, and
- a data storage device 110.

In its most basic configuration, the system 100 typically includes at least one processing unit (or processor) and memory. In examples, the processor and memory unit may be incorporated into the system 100 or may be a computer 104 or computer communicatively linked thereto such as depicted in FIG. 1. Depending on the exact configuration and type of computing device, memory (storing, instructions to evaluate ultrasound data or otherwise perform the methods described herein) may be volatile (such as RAM), non-volatile (such as RAM, flash memory, etc.), or some combination of the two. Further, the system 100 may also include storage devices (removable and/or non-removable) including, but not limited to, magnetic or optical disks or tape. Similarly, the system 100 may also have input device(s) such as keyboard, mouse, pen, voice input, etc. and/or output device(s) such as a display, speakers, printer, etc. Also included in the environment may be one or more communication connections, such as LAN, WAN, point to point, etc. In embodiments, the connections may be operable to facility point-to-point communications, connection-oriented communications, connectionless communications, etc.

The system 100 typically includes at least some form of computer readable media. Computer readable media can be any available media that can be accessed by processing unit (or processor) or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media does not include communication media.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, microwave, and other wireless media. Combinations of the any of the above should also be included within the scope of computer readable media.

The system 100 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets and the Internet.

For example, the system 100 may be configured to receive from a camera device 102 (such as smartphone camera) a set of first perspective 2D images of a scene, and from a panoramic camera 106 (such as a 360° camera) a panoramic image in the scene. The system 100 may be configured to obtain, using a reconstruction module, a 3D representation of a scene based on the set of first perspective images, and convert the panoramic image into a set of second perspective images of the scene, each second perspective image being associated with a virtual camera. The panoramic image may be provided with an orientation information of a vertical axis of the panoramic camera 106. For example, the orientation information may include vertical axis data provided by the gravity sensor (not shown), which may be incorporated into the panoramic camera 106.

The system 100 may then be configured to, for each second perspective image, estimate a 6D pose of the virtual camera in the 3D representation based on the second perspective image using a localization module, select estimated 6D poses which fulfill a predefined set of criteria, and estimate the pose of the panoramic image in the 3D representation based on the second perspective images associated with the selected 6D poses using the localization module.

The gravity sensor may be part of the 360° camera 106, or may be external thereto. The gravity sensor may be configured to obtain vertical sensor data including vertical axis data, based on which the system may determine outliers and remove them by comparing estimated poses and their vertical axis (as described in more detail above).

The 3D representation of the scene, may be displayed (or at least different views in the scene) on the display device 108.

Accordingly, a 3D (i.e. three dimensional) model, i.e. a digital twin of a 3D scene, for example an indoor scene, such as a furnished apartment or a construction site of a building, may be obtained and visualized by the system. For example, the system may be configured to allow a system user to virtually (and optionally continuously and/or seamlessly) move in the 3D scene. In other words, it may be desirable to freely choose a 6D-pose of a virtual camera. This movement may include moving (e.g. continuously and/or seamlessly moving) to the position of a panoramic camera 106, such that the user can view the respective 360 image. The 360 may thereby be integrated into the 3D model, such that the user does not perceive any disruption (or only a minimum one) of the virtual movement in the scene.

Further, by using the system 100 a user may automatically align a 360 image with a 3D representation of a scene including for example defects or damages that occurred after a rental period and that were retrieved after an inspection using a smartphone camera. This allows the user to use the system 100 to navigate to a 360 image and detect hotspots corresponding to the defects. Based on an identified or selected hotspot, the system may additionally provide an image of a 2D dataset taken with the smartphone that corresponds to the defect at this place.

The data representation and/or the respective 3D model of the scene may also be stored on the data storage device 110. It is also possible, that data representations and/or the respective 3D models are generated by the system at different time points and each of these is stored on the data storage device 110. Accordingly, an evolution of the scene may be derived or monitored based on a comparison of these stored data stored. For example, the system 100 may be used to enhance a 3D representation of a scene, by performing a method according to any one of the preceding methods of the present disclosure, and by integrating the panoramic image into the 3D representation at the estimated pose of the panoramic camera. The system 100 can be advantageously used for filling blind spots (e.g. a surface which is a region of the ceiling or of one side of a sofa) in a 2D image set with image information of a 360° camera image.

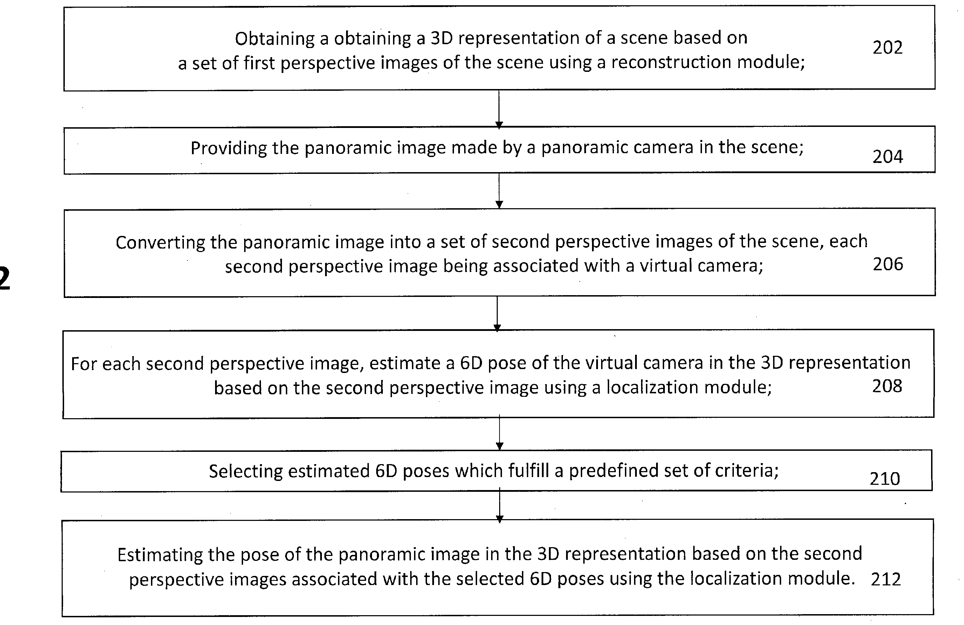

Fig. 2 schematically shows a method 200 for estimating a pose of a panoramic image according to examples of the present disclosure.

The method 200 may for example be carried out by a system 100, as described above.

In Step 202 a set of first perspective 2D images of a scene is provided.

The 2D images may be taken by a camera device, as e.g. described in context of fig. 1, such as a smartphone. Typically, a user of the camera device may walk through the scene and simultaneously take several images or a video of different parts of the scene.

Based on the set of first perspective image, a 3D representation of the scene is obtained using a reconstruction module (as described in more details above):

In Step 204, a panoramic image is provided by a panoramic camera in the scene (e.g. a Ricoh^{®} 360° camera). For example, the panoramic camera may be placed at different positions in the scene, order to take respective panoramic images.

In Step 206, the panoramic image is converted into a set of second perspective images of the scene, each second perspective image being associated with a virtual camera.

The method proceeds to Step 208, where for each second perspective image, a 6D pose of the virtual camera in the 3D representation is estimated based on the second perspective image using a localization module (as described in more details above).

The reconstruction module and the localization module may be or may comprise a deep learning model (as described in more detail above).

In Step 210, 6D poses which fulfill a predefined set of criteria are selected.

In Step 212, the method proceeds in estimating the pose of the panoramic image in the 3D representation based on the second perspective images associated with the selected 6D poses using the localization module.

The proposed solution has the following advantages:
It allows for sensor fusion between a scene captured by a phone/camera and a 360° device like a Ricoh^{®} 360° camera.
It leverages existing methods to localize a standard picture (Perspective Camera) inside a Structure from Motion model (as seen above in the Summary section).
It transforms a 360 image into a set of extracted images that cover the space at a unique position, such as cubefaces (or any other Perspective Camera), localizes them individually, removes outliers by comparing the estimated poses and the vertical axis (which should be aligned with gravity), and formulates an optimization problem to localize the set of cameras corresponding to the inlier extracted images. This leads to a more precise and accurate alignment between the 360° camera image and the 3D model of the scene.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

The terms "record" and "receive" may be used synonymously throughout this disclosure unless denoted differently.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A computer-implemented method of estimating a pose of a panoramic image, comprising:
obtaining a 3D representation of a scene based on a set of first perspective images of the scene using a reconstruction module;
providing the panoramic image made by a panoramic camera in the scene;
converting the panoramic image into a set of second perspective images of the scene, each second perspective image being associated with a virtual camera;
for each second perspective image, estimate a 6D pose of the virtual camera in the 3D representation based on the second perspective image using a localization module;
selecting estimated 6D poses which fulfill a predefined set of criteria; and
estimating the pose of the panoramic image in the 3D representation based on the second perspective images associated with the selected 6D poses using the localization module.

2. The method of claim 1, wherein
the panoramic image is a 360° image, and/or
the panoramic image is provided with an orientation information of a vertical axis of the panoramic camera.

3. The method of claim 1 or 2, wherein
the pose of the panoramic camera comprises a 3D position of the panoramic camera and optionally an orientation information of a vertical axis of the panoramic camera; and/or
estimating the pose of the panoramic camera comprises aligning the orientation of the vertical axis of the panoramic camera with an orientation of the vertical axis of the 3D representation.

4. The method according to any one of the preceding claims, wherein estimating the pose of the panoramic image in the 3D representation comprises inputting the entirety of second perspective images associated with the selected 6D poses into the localization module; and
wherein the localization module is optionally configured to minimize an error of the estimated pose based on said entirety of second perspective images.

5. The method according to any one of the preceding claims, wherein the localization module is built on top of the reconstruction module.

6. The method according to any one of the preceding claims, wherein the localization module is configured to use the reconstruction module for extracting features from the associated second perspective image, and optionally for mapping the features to the 3D representation.

7. The method according to the preceding claim, wherein the localization module estimates a 6D pose of a camera based on the output of the reconstruction module, the camera being optionally a real camera or the virtual camera.

8. The method according to any one of the preceding claims, wherein the second perspective images are cubefaces of a virtual cube representing the converted panoramic image; and/or
wherein the second perspective images have a predefined pixel size and/or field of view, optionally corresponding to the pixel size and/or the field of view of the first perspective images.

9. The method according to any one of the preceding claims, wherein the predefined set of criteria comprise at least one of:
a 3D position of the virtual camera being within a predefined 3D cluster or 3D area with respect to the 3D positions of the other virtual cameras;
a 3D orientation of the virtual camera being in a predefined angular range with respect to the 3D orientations of the other virtual cameras, the virtual camera and/or its associated second perspective image being aligned with a vertical axis, optionally using a predefined tolerance range.

10. The method according to any one of the preceding claims, wherein the reconstruction module is or comprises a Structure from Motion, SfM, algorithm, and/or
at least one of the reconstruction module and the localization module is or comprises a deep learning model.

11. A computer-implemented method of enhancing a 3D representation of a scene, comprising:
performing a method according to any one of the preceding claims; and
integrating the panoramic image into the 3D representation at the estimated pose of the panoramic camera.

12. The method according to the preceding claim, further comprising:
selecting an area in the 3D representation having a predefined characteristic;
estimating a 6D pose of the selected area;
based on the 6D pose of the selected area, selecting a second perspective image which covers the area of the selected area;
updating the 3D representation based on the selected second perspective image using the reconstruction module.

13. A computer program comprising instructions which, when executed by a computer, cause the computer to carry out a method according to any of the preceding method claims.

14. A system, comprising at least one memory storing:
a 3D representation of a scene, and
at least one panoramic image integrated into the 3D representation at an estimated pose of the at least one panoramic camera.

15. The system of claim 14,
wherein the pose is estimated using a method according to any one of the preceding method claims; and/or
wherein the system further comprises at least one processor, and wherein the at least one memory stores computer-executable instructions, which when executed by the processor cause the processor to perform a method according to any one of the preceding claims.
